# EUROPEAN PATENT APPLICATION

(11) **EP 4 723 488 A1**
(43) Date of publication of application: **08.04.2026**
(21) Application number: 24830568.2
(22) Date of filing: 18.06.2024
(51) Int. Cl.: H04B 1/04

(54) **MULTI-PLANE ANTENNA SYSTEM AND POWER ALLOCATION METHOD**

(30) Priority: 30.06.2023 CN 202310803871
(71) Applicant: Huawei Technologies Co., Ltd., Shenzhen, Guangdong 518129 (CN)
(72) Inventor: LI, Bojie, Shenzhen, Guangdong 518129 (CN); ZHANG, Guanxi, Shenzhen, Guangdong 518129 (CN); LI, Xianghua, Shenzhen, Guangdong 518129 (CN)
(74) Representative: Epping - Hermann - Fischer
(86) International application number: PCT/CN2024/099864
(87) International publication number: WO 2025/001922

(57) **Abstract**

Embodiments of this application provide a multi-plane antenna system and a power allocation method. The multi-plane antenna system includes: at least two radiation planes, configured to radiate signals, where each radiation plane includes at least one antenna, each radiation plane is connected to at least one radio frequency channel, orientations of M radiation planes of the at least two radiation planes are different, and M is a positive integer greater than or equal to 2; and a power control module, configured to determine transmit powers of the at least two radiation planes based on an available transmit power value of the multi-plane antenna system, where the power control module is logically connected to radio frequency channels corresponding to the at least two radiation planes. Therefore, the power control module is used to configure a transmit power of the entire multi-plane antenna system, to implement coordination and power sharing and allocation among a plurality of antennas.

## Description

This application claims priority to Chinese Patent Application No. 202310803871.6, filed with the China National Intellectual Property Administration on June 30, 2023 and entitled "MULTI-PLANE ANTENNA SYSTEM AND POWER ALLOCATION METHOD", which is incorporated herein by reference in its entirety.

### TECHNICAL FIELD

This application relates to the field of wireless communication, and in particular, to a multi-plane antenna system and a power allocation method.

### BACKGROUND

In a wireless communication network, a base station, serving as a key network node, plays a key role in the communication network. With the development of mobile communication, forms of the base station device also become diversified. For example, a multi-plane antenna system architecture is formed by two radiation planes (two-plane), three radiation planes (three-plane), or a plurality of radiation planes (multi-plane). However, for the multi-plane antenna system architecture, each radiation plane is independently responsible for coverage of a corresponding cell (or a sector), that is, a transmit power is independently configured for each radiation plane. In this way, for the entire multi-plane antenna system architecture, when some radiation planes do not transmit powers, a maximum transmit power of the multi-plane antenna system is a maximum transmit power of radiation planes that currently can transmit powers. In this case, if an available transmit power value of the multi-plane antenna system is higher than the maximum transmit power of the current multi-plane antenna system, maximum utilization of a transmit power of the entire multi-plane antenna system cannot be implemented.

### SUMMARY

Embodiments of this application provide a multi-plane antenna system and a power allocation method. A power control module is used to configure a transmit power of the entire multi-plane antenna system, to implement coordination and power sharing and allocation among a plurality of antennas, and maximum power utilization of the antenna system.

According to a first aspect, a multi-plane antenna system is provided, including: at least two radiation planes, configured to radiate signals, where each radiation plane includes at least one antenna, each radiation plane is connected to at least one radio frequency channel, orientations of M radiation planes of the at least two radiation planes are different, and M is a positive integer greater than or equal to 2; and a power control module, configured to determine transmit powers of the at least two radiation planes based on an available transmit power value of the multi-plane antenna system, where the power control module is logically connected to radio frequency channels corresponding to the at least two radiation planes.

It should be understood that, that the orientations of the M radiation planes of the at least two radiation planes are different may be understood as a case in which orientations of the at least two radiation planes included in the multi-plane antenna system are not completely the same. Alternatively, orientations of the at least two radiation planes in the multi-plane antenna system are different. In other words, in the at least two radiation planes included in the multi-plane antenna system, orientations of two radiation planes need to be different.

It should be understood that, the two radiation planes whose orientations are different serve two different cells. Alternatively, orientations of the two radiation planes are different, and cells that are served are also different.

For example, the multi-plane antenna system includes two radiation planes (a radiation plane #1 and a radiation plane #2). An orientation of the radiation plane #1 and an orientation of the radiation plane #2 are different.

For example, the multi-plane antenna system includes three radiation planes (a radiation plane #1, a radiation plane #2, and a radiation plane #3). An orientation of the radiation plane #1 and an orientation of the radiation plane #2 are the same, and an orientation of the radiation plane #3 is different from the orientation of the radiation plane #1 and the orientation of the radiation plane #2.

For example, the multi-plane antenna system includes three radiation planes (a radiation plane #1, a radiation plane #2, and a radiation plane #3). An orientation of the radiation plane #1, an orientation of the radiation plane #2, and an orientation of the radiation plane #3 are all different.

It should be understood that, that the power control module is logically connected to the radio frequency channels corresponding to the at least two radiation planes may be understood as a case in which in the multi-plane antenna system, the radio frequency channels corresponding to the at least two radiation planes are logically connected to the power control module. Alternatively, the power control module is separately connected to at least two radio frequency channels corresponding to different radiation planes. It should be understood that, that the power control module is logically connected to the radio frequency channels corresponding to the at least two radiation planes may mean that the power control module is directly or indirectly connected to the radio frequency channels corresponding to the at least two radiation planes. A connection manner between the power control module and the radio frequency channels corresponding to the at least two radiation planes is not limited in this application.

It should be understood that the transmit power of the multi-plane antenna system is a power of a signal (an electrical signal) that is input into the multi-plane antenna system at a moment and that is effectively converted into an electromagnetic wave. A maximum transmit power (a rated transmit power) of the multi-plane antenna system is a maximum value that can be reached by the transmit power of the multi-plane antenna system, or a maximum value that can be reached by a sum of transmit powers of all radiation planes included in the multi-plane antenna system at a same moment. The available transmit power value of the multi-plane antenna system is a value obtained by subtracting a used transmit power (for example, a transmit power used in a specific requirement) from the maximum transmit power of the multi-plane antenna system.

It should be understood that the available transmit power value of the multi-plane antenna system is less than or equal to the maximum transmit power of the multi-plane antenna system. Generally, the maximum transmit power of the multi-plane antenna system is the available transmit power value of the multi-plane antenna system. In the foregoing solution, the power control module is used to configure a power of the entire multi-plane antenna system, to implement coordination among a plurality of radiation planes and power sharing and allocation. Further, when the orientations of the at least two radiation planes in the multi-plane antenna system are different, and users in different areas (or cells) are served, power sharing between different cells may be implemented.

In a possible implementation, that the power control module is configured to determine the transmit powers of the at least two radiation planes based on the available transmit power value of the multi-plane antenna system includes: The power control module is configured to determine, based on the available transmit power value of the multi-plane antenna system and service requirements corresponding to the at least two radiation planes, power amplification outputs of power amplification modules corresponding to the at least two radiation planes.

For example, the multi-plane antenna system includes two radiation planes (a radiation plane #1 and a radiation plane #2). The available transmit power value of the multi-plane antenna system is 300 W, and both a maximum transmit power of the radiation plane #1 and a maximum transmit power of the radiation plane #2 are 200 W. If a transmit power of a service requirement corresponding to the radiation plane #1 is 100 W, and a transmit power of a service requirement corresponding to the radiation plane #2 is 100 W, the power control module determines, based on the service requirement corresponding to the radiation plane #1 and the service requirement corresponding to the radiation plane #2, that a power amplification output of a power amplification module corresponding to the radiation plane #1 is 100 W, and a power amplification output of a power amplification module corresponding to the radiation plane #2 is 100 W.

In a possible implementation, the power control module is configured to determine a power difference based on the available transmit power value of the multi-plane antenna system and the service requirements corresponding to the at least two radiation planes, where the power difference is a difference between a sum of the service requirements corresponding to the at least two radiation planes and the available transmit power value of the multi-plane antenna system; and the power control module is configured to determine, based on the service requirements corresponding to the at least two radiation planes and the power difference, the power amplification outputs of the power amplification modules corresponding to the at least two radiation planes.

For example, the multi-plane antenna system includes two radiation planes (a radiation plane #1 and a radiation plane #2). The available transmit power value of the multi-plane antenna system is 300 W, and both a maximum transmit power of the radiation plane #1 and a maximum transmit power of the radiation plane #2 are 200 W. If a transmit power of a service requirement corresponding to the radiation plane #1 is 100 W, and a transmit power of a service requirement corresponding to the radiation plane #2 is 200 W, a sum of the transmit power of the service requirement corresponding to the radiation plane #1 and the transmit power of the service requirement corresponding to the radiation plane #2 is 300 W. In this case, a power difference is 0. Therefore, the power control module determines that a power amplification output of a power amplification module corresponding to the radiation plane #1 is 100 W, and a power amplification output of a power amplification module corresponding to the radiation plane #2 is 200 W.

For example, the multi-plane antenna system includes two radiation planes (a radiation plane #1 and a radiation plane #2). The available transmit power value of the multi-plane antenna system is 300 W, and both a maximum transmit power of the radiation plane #1 and a maximum transmit power of the radiation plane #2 are 200 W. If a transmit power of a service requirement corresponding to the radiation plane #1 is 100 W, and a transmit power of a service requirement corresponding to the radiation plane #2 is 150 W, a sum of the transmit power of the service requirement corresponding to the radiation plane #1 and the transmit power of the service requirement corresponding to the radiation plane #2 is 250 W. In this case, a power difference is 50 W (alternatively, in this case, in addition to satisfying the transmit power of the service requirement corresponding to the radiation plane #1 and the transmit power of the service requirement corresponding to the radiation plane #2, the available transmit power value of the multi-plane antenna system still has 50 W left). Therefore, the power control module may further allocate the unallocated (remaining) 50 W to the radiation plane #1 and the radiation plane #2.

It should be understood that, when the power control module further allocates the unallocated transmit power to the radiation plane #1 and the radiation plane #2, allocation may be performed based on a ratio, a service requirement, or a radiation priority. This is not limited in this application.

For example, the power control module allocates the unallocated 50 W to the radiation plane #1 and the radiation plane #2 based on a ratio. For example, the power control module further allocates 25 W to the radiation plane #1 and the radiation plane #2 respectively based on a ratio of 1:1 (average). In other words, in this case, the power amplification output of the power amplification module corresponding to the radiation plane #1 includes a sum, namely, 125 W, of the transmit power (100 W) of the service requirement corresponding to the radiation plane #1 and the additionally allocated 25 W, and the power amplification output of the power amplification module corresponding to the radiation plane #2 includes a sum, namely, 175 W, of the transmit power (150 W) of the service requirement corresponding to the radiation plane #2 and the additionally allocated 25 W. Alternatively, the power control module further allocates 40 W to the radiation plane #1 and 10 W to the radiation plane #2 respectively based on a ratio of 4:1. In other words, in this case, the power amplification output of the power amplification module corresponding to the radiation plane #1 includes a sum, namely, 140 W, of the transmit power (100 W) of the service requirement corresponding to the radiation plane #1 and the additionally allocated 40 W, and the power amplification output of the power amplification module corresponding to the radiation plane #2 includes a sum, namely, 160 W, of the transmit power (150 W) of the service requirement corresponding to the radiation plane #2 and the additionally allocated 10 W.

For another example, the power control module allocates the unallocated 50 W to the radiation plane #1 and the radiation plane #2 based on the service requirement. If the transmit power of the service requirement corresponding to the radiation plane #1 is higher than the transmit power of the service requirement corresponding to the radiation plane #2, 30 W is further allocated to the radiation plane #1, and 20 W is further allocated to the radiation plane #2. In other words, in this case, the power amplification output of the power amplification module corresponding to the radiation plane #1 includes a sum, namely, 130 W, of the transmit power (100 W) of the service requirement corresponding to the radiation plane #1 and the additionally allocated 30 W, and the power amplification output of the power amplification module corresponding to the radiation plane #2 includes a sum, namely, 170 W, of the transmit power (150 W) of the service requirement corresponding to the radiation plane #2 and the additionally allocated 20 W.

In the foregoing solution, based on a specific service requirement, the power control module is used to adjust the power amplification output of the power amplification module in the multi-plane antenna system, to implement power sharing and allocation among the plurality of radiation planes in the multi-plane antenna system.

It should be understood that, to avoid a problem that when the power control module further allocates the unallocated transmit power to the at least two radiation planes, an actually allocated transmit power exceeds the maximum transmit powers of the radiation planes, power amplification capabilities of power amplification modules in the radio frequency channels corresponding to the radiation planes need to be improved, so that when the power control module shares and allocates the available transmit power value of the multi-plane antenna system between different radiation planes, the power amplification capabilities of the power amplification modules constitute no limitation.

In a possible implementation, each radio frequency channel includes a power amplification module, and a power amplification capability of at least one power amplification module in the multi-plane antenna system is greater than a value obtained by dividing the maximum transmit power of the multi-plane antenna system by a quantity of radio frequency channels in the multi-plane antenna system. It should be understood that, that each radio frequency channel includes a power amplification module may be understood as a case in which in the at least two radiation planes included in the multi-plane antenna system, at least one radio frequency channel corresponding to each radiating plane includes (corresponds to) one power amplification module (power amplifier, PA), to amplify a radio frequency signal and increase an output power.

It should be understood that, in the multi-plane antenna system, the power amplification capability of the at least one power amplification module is greater than a value obtained by dividing the maximum transmit power of the multi-plane antenna system by a total quantity of radio frequency channels included in the multi-plane antenna system.

For example, the multi-plane antenna system includes two radiation planes (a radiation plane #1 and a radiation plane #2). The radiation plane #1 and the radiation plane #2 are respectively connected to a radio frequency channel #1 and a radio frequency channel #2. The radio frequency channel #1 and the radio frequency channel #2 respectively include (correspond to) a power amplification module #1 and a power amplification module #2. The maximum transmit power of the multi-plane antenna system is 200 W, and a power amplification capability of the power amplification module #1 is greater than a value obtained by dividing the maximum transmit power (200 W) of the multi-plane antenna system by the quantity (2) of radio frequency channels included in the multi-plane antenna system, that is, the power amplification capability of the power amplification module #1 is greater than 100 W. For another example, a power amplification capability of the power amplification module #2 is greater than 100 W. For another example, both a power amplification capability of the power amplification module #1 and a power amplification capability of the power amplification module #2 are greater than 100 W.

For example, the multi-plane antenna system includes three radiation planes (a radiation plane #1, a radiation plane #2, and a radiation plane #3). The radiation plane #1, the radiation plane #2, and the radiation plane #3 are respectively connected to a radio frequency channel #1, a radio frequency channel #2, and a radio frequency channel #3. The radio frequency channel #1, the radio frequency channel #2, and the radio frequency channel #3 respectively include (correspond to) a power amplification module #1, a power amplification module #2, and a power amplification module #3. The maximum transmit power of the multi-plane antenna system is 600 W, and a power amplification capability of the power amplification module #1 is greater than a value obtained by dividing the maximum transmit power (600 W) of the multi-plane antenna system by the quantity (3) of radio frequency channels included in the multi-plane antenna system, that is, the power amplification capability of the power amplification module #1 is greater than 200 W. For another example, both a power amplification capability of the power amplification module #1 and a power amplification capability of the power amplification module #2 are greater than 200 W. For another example, a power amplification capability of the power amplification module #1, a power amplification capability of the power amplification module #2, and a power amplification capability of the power amplification module #3 are all greater than 200 W.

It should be noted that a quantity of radio frequency channels connected to each radiation plane is not limited in this application.

It should be understood that, in the multi-plane antenna system, if a radiation plane is connected to at least two radio frequency channels, a power amplification capability of a power amplification module included in one of the radio frequency channels needs to be greater than a value obtained by dividing the maximum transmit power of the multi-plane antenna system by the total quantity of radio frequency channels included in the multi-plane antenna system. A power amplification capability of a power amplification module included in another radio frequency channel of the radiation plane is not limited. For example, the power amplification capability of the power amplification module included in the another radio frequency channel of the radiation plane may be less than a value obtained by dividing the maximum transmit power of the multi-plane antenna system by the total quantity of radio frequency channels included in the multi-plane antenna system.

For example, the multi-plane antenna system includes two radiation planes (a radiation plane #1 and a radiation plane #2). The radiation plane #1 is connected to a radio frequency channel #1 and a radio frequency channel #2, and the radiation plane #2 is connected to a radio frequency channel #3. The radio frequency channel #1, the radio frequency channel #2, and the radio frequency channel #3 respectively include (correspond to) a power amplification module #1, a power amplification module #2, and a power amplification module #3. The maximum transmit power of the multi-plane antenna system is 300 W. For the radiation plane #1, the power amplification capability of the power amplification module #1 is greater than a value obtained by dividing the maximum transmit power (300 W) of the multi-plane antenna system by the quantity (3) of radio frequency channels included in the multi-plane antenna system, that is, the power amplification capability of the power amplification module #1 is greater than 100 W, and a power amplification capability of the power amplification module #2 may be less than 100 W. For another example, both the power amplification capability of the power amplification module #1 and a power amplification capability of the power amplification module #3 are greater than 100 W.

In the foregoing solution, the power amplification capability of the power amplification module included in the radio frequency channel is improved, so that a power that can support the multi-plane antenna system is flexibly shared and allocated between different radiation planes without being limited by the power amplification capability, to improve performance of the multi-plane antenna system.

In a possible implementation, the at least two radiation planes include a first radiation plane and a second radiation plane, where the first radiation plane has a maximum value of a transmit power at a first moment, the maximum value of the transmit power of the first radiation plane is a first power value, the second radiation plane has a maximum value of a transmit power at a second moment, and the maximum value of the transmit power of the second radiation plane is a second power value; and a sum of the first power value and the second power value is greater than the maximum transmit power of the multi-plane antenna system, where the first power value is less than or equal to the maximum transmit power of the multi-plane antenna system, and the second power value is less than or equal to the maximum transmit power of the multi-plane antenna system.

In the foregoing solution, the power control module is used, so that a sum of the maximum value of the transmit power of the first radiation plane and the maximum value of the transmit power of the second radiation plane at different moments is greater than the maximum transmit power of the multi-plane antenna system. This avoids a problem of low power utilization caused by a case in which the maximum transmit power of the radiation plane at different moments cannot exceed the maximum transmit power of the antenna system. Power sharing and allocation are performed among the plurality of radiation planes in the multi-plane antenna system, so that maximized utilization of the transmit power of the multi-plane antenna system can be implemented to the greatest extent, so as to improve system performance.

In a possible implementation, the at least two radiation planes include the first radiation plane and the second radiation plane, where a transmit power of the first radiation plane at a third moment is a third power value, and a transmit power of the second radiation plane at the third moment is a fourth power value; and the power control module is further configured to share and allocate the transmit power of the first radiation plane and the transmit power of the second radiation plane, so that a sum of the third power value and the fourth power value is less than or equal to the maximum transmit power of the multi-plane antenna system.

In the foregoing solution, the power control module is used, so that a sum of the transmit power of the first radiation plane and the transmit power of the second radiation plane at a same moment does not exceed the maximum transmit power of the multi-plane antenna system, to ensure normal operation of the multi-plane antenna system.

In a possible implementation, on each radiation plane, the at least one antenna and the radio frequency channel are located inside an active antenna unit; or the at least one antenna is located inside a passive antenna, and the radio frequency channel is located inside a remote radio unit.

In the foregoing solution, the antenna included on each radiation plane in the multi-plane antenna system and the radio frequency channel connected to the radiation plane may be located inside a same active antenna unit, or may be separately located inside the passive antenna and the remote radio unit, to increase diversity of physical implementation of the multi-plane antenna system.

In a possible implementation, the power control module is located inside the active antenna unit or the remote radio unit; or the power control module is located outside the active antenna unit or the remote radio unit.

In the foregoing solution, the power control module included in the multi-plane antenna system may be located inside or outside the active antenna unit or the remote radio unit, to increase the diversity of the physical implementation of the multi-plane antenna system.

According to a second aspect, a power allocation method is provided, where the method is applied to a multi-plane antenna system, and the multi-plane antenna system includes at least two radiation planes and a power control module.

The method may include: The power control module determines transmit powers of the at least two radiation planes based on an available transmit power value of the multi-plane antenna system; and the power control module allocates the transmit powers of the at least two radiation planes to the at least two radiation planes, where each of the at least two radiation planes includes at least one antenna, each radiation plane is connected to at least one radio frequency channel, orientations of M radiation planes of the at least two radiation planes are different, M is a positive integer greater than or equal to 2, and the power control module is logically connected to radio frequency channels corresponding to the at least two radiation planes.

In a possible implementation, that the power control module is configured to determine the transmit powers of the at least two radiation planes based on the available transmit power value of the multi-plane antenna system includes: The power control module is configured to determine, based on the available transmit power value of the multi-plane antenna system and service requirements corresponding to the at least two radiation planes, power amplification outputs of power amplification modules corresponding to the at least two radiation planes.

In a possible implementation, that the power control module is configured to determine, based on the available transmit power value of the multi-plane antenna system and the service requirements corresponding to the at least two radiation planes, the power amplification outputs of the power amplification modules corresponding to the at least two radiation planes includes: The power control module is configured to determine a power difference based on the available transmit power value of the multi-plane antenna system and the service requirements corresponding to the at least two radiation planes, where the power difference is a difference between a sum of the service requirements corresponding to the at least two radiation planes and the available transmit power value of the multi-plane antenna system; and the power control module is configured to determine, based on the service requirements corresponding to the at least two radiation planes and the power difference, the power amplification outputs of the power amplification modules corresponding to the at least two radiation planes.

In a possible implementation, each radio frequency channel includes a power amplification module, and a power amplification capability of at least one power amplification module in the multi-plane antenna system is greater than a value obtained by dividing a maximum transmit power of the multi-plane antenna system by a quantity of radio frequency channels in the multi-plane antenna system.

In a possible implementation, the at least two radiation planes include a first radiation plane and a second radiation plane, where the first radiation plane has a maximum value of a transmit power at a first moment, the maximum value of the transmit power of the first radiation plane is a first power value, the second radiation plane has a maximum value of a transmit power at a second moment, and the maximum value of the transmit power of the second radiation plane is a second power value; and a sum of the first power value and the second power value is greater than the maximum transmit power of the multi-plane antenna system, where the first power value is less than or equal to the maximum transmit power of the multi-plane antenna system, and the second power value is less than or equal to the maximum transmit power of the multi-plane antenna system.

In a possible implementation, the at least two radiation planes include the first radiation plane and the second radiation plane, a transmit power of the first radiation plane at a third moment is a third power value, a transmit power of the second radiation plane at the third moment is a fourth power value, and a sum of the third power value and the fourth power value is less than or equal to the maximum transmit power of the multi-plane antenna system.

For explanations of related content and beneficial effects of the power allocation method provided in the second aspect, refer to the multi-plane antenna system shown in the first aspect. Details are not described herein again.

According to a third aspect, a communication device is provided, including the foregoing multi-plane antenna system according to the first aspect, or a device that can perform the method according to any one of the possible implementations of the second aspect.

For example, the foregoing communication device may be a base station, or may be another communication device having a same or similar function as that of the base station, or the like. This is not limited in this application.

### BRIEF DESCRIPTION OF DRAWINGS

FIG. 1 is a diagram of a passive antenna;
FIG. 2 is a diagram of a two-plane antenna system;
FIG. 3 is a diagram of a three-plane antenna system;
FIG. 4 is a diagram of another three-plane antenna system;
FIG. 5 is a diagram of a structure of a two-plane antenna system; and
FIG. 6 is a diagram of a structure of a three-plane antenna system.

### DESCRIPTION OF EMBODIMENTS

The following explains terms that may appear in embodiments of this application.

### 1. Active antenna

An active antenna includes at least an amplifier (for example, a power amplifier (PA)), a filter, and a radiating antenna part. The active antenna integrates a radio frequency part of a base station into the antenna, and coordination between a multi-channel radio frequency and an antenna element is used to implement spatial beamforming and complete reception and transmission of a radio frequency signal.

### 2. Passive antenna

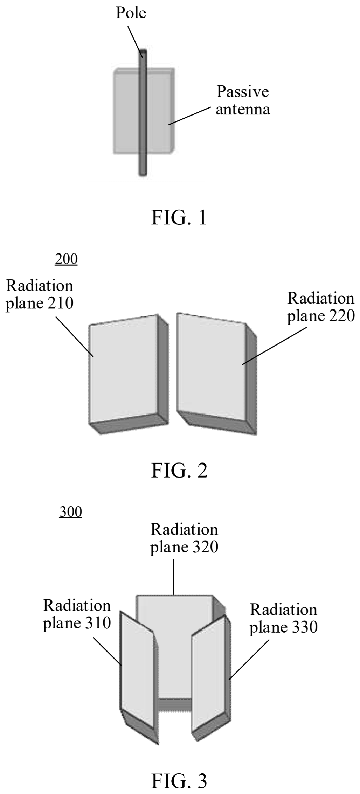

A passive antenna is a radiating element entirely formed by a passive component. Generally, a passive antenna system is a system that includes at least a passive radiator (an antenna element), passive impedance matching, a passive balun, and passive interconnection (generally, impedance of 50 ohm or 75 ohm). Generally, the passive antenna is mounted on a pole. As shown in FIG. 1, a pole is on a rear side, and the passive antenna is on a front side, to perform electromagnetic radiation and transmit a signal.

In this specification, the claims, and the foregoing accompanying drawings of this application, terms "first", "second", "third", "fourth", and the like (if existent) are intended to distinguish between similar objects but do not necessarily describe a specific order or sequence. It should be understood that the data termed in such a way are interchangeable in proper circumstances so that embodiments described herein can be implemented in other orders than the content illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following describes technical solutions in embodiments of this application with reference to the accompanying drawings.

FIG. 2 and FIG. 3 are respectively a diagram of a two-plane antenna system 200 and a diagram of a three-plane antenna system 300. In FIG. 2, the two-plane antenna system 200 is formed by a radiation plane 210 and a radiation plane 220. In the two-plane antenna system 200, antenna radiation planes are disposed on two sides of a system architecture, to transmit an electromagnetic signal. In FIG. 3, the three-plane antenna system 300 (three cells and one base station) is formed by a radiation plane 310, a radiation plane 320, and a radiation plane 330. In the three-plane antenna system 300, the antenna radiation planes are disposed on a front side, a left side, and a right side of a system architecture, and all the three planes can transmit an electromagnetic signal, which is equivalent to expanding an antenna aperture.

It should be noted that a quantity of radiation planes included in a multi-plane antenna system provided in this application is not limited. For example, the multi-plane antenna system provided in this application may be a two-plane antenna system, a three-plane antenna system, a four-plane antenna system, or the like. It should be further noted that the multi-plane antenna system provided in this application may include an active antenna unit, or may further include a passive antenna unit, or the like. This is not limited in this application. For ease of description, in this application, an "antenna" is used for description.

It should be noted that FIG. 2 and FIG. 3 are merely one of antenna forms of the multi-plane antenna system architecture provided in this application. An array surface size, an element structure, arrangement, and the like that are used by radiating antennas on the front side and the two sides of the multi-plane antenna system in FIG. 2 and FIG. 3 are merely examples. This is not limited in this application.

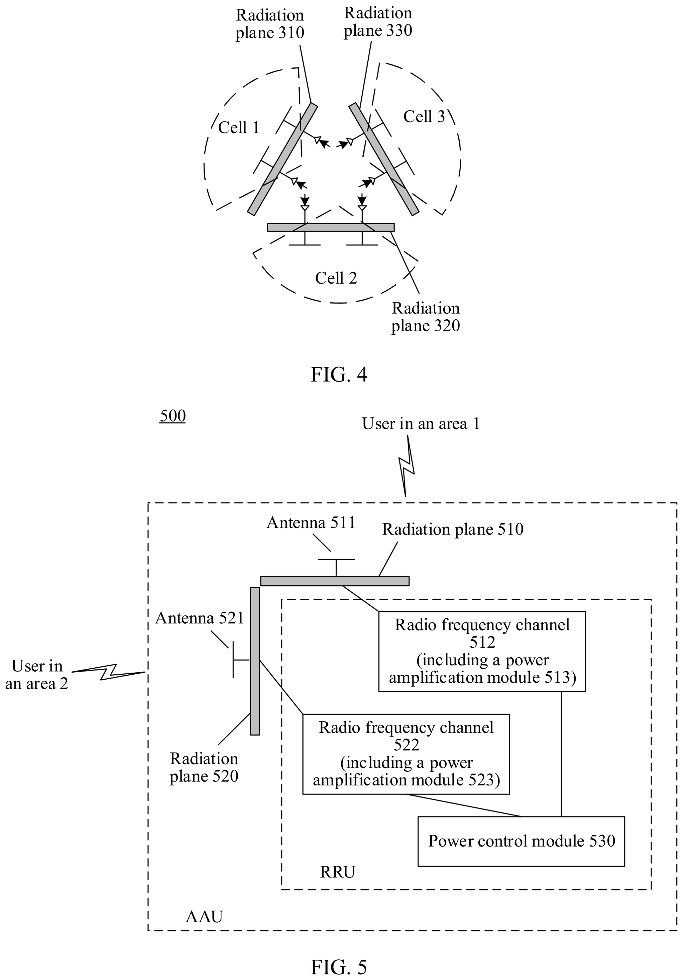

FIG. 4 is a diagram of radiation of a three-plane antenna system 300. As shown in FIG. 4, for the three-plane antenna system 300, each radiation plane (each antenna unit) is independently responsible for coverage of a corresponding cell (or a sector). For example, in FIG. 4, a radiation plane 310 includes an antenna 311 and an antenna 312, and the radiation plane 310 is responsible for coverage of a cell 1 (alternatively, a radiation range of the radiation plane 310 is a cell 1); a radiation plane 320 includes an antenna 321 and an antenna 322, and the radiation plane 320 is responsible for coverage of a cell 2 (alternatively, a radiation range of the radiation plane 320 is a cell 2); and a radiation plane 330 includes an antenna 331 and an antenna 332, and the radiation plane 330 is responsible for coverage of a cell 3 (alternatively, a radiation range of the radiation plane 330 is a cell 3).

For the three-plane antenna system shown in FIG. 4, a transmit power of each cell is independently configured for each radiation plane, and a maximum power of each cell cannot exceed a maximum transmit power of a standard specification of a radiation plane that radiates the cell. For example, if a maximum transmit power of the radiation plane 310 is 200 W, a maximum power of the cell 1 needs to be less than or equal to 200 W; if a maximum transmit power of the radiation plane 320 is 100 W, a maximum power of the cell 2 needs to be less than or equal to 100 W; and if a maximum transmit power of the radiation plane 330 is 150 W, a maximum transmit power of the cell 3 needs to be less than or equal to 150 W. However, when some of the radiation planes (for example, the radiation plane 310 and the radiation plane 320) do not transmit powers, a maximum transmit power of the entire three-plane antenna system is a maximum transmit power of the cell 3, which is 150 W. In this case, if an available transmit power value of the three-plane antenna system is 300 W, for the entire three-plane antenna system, because the maximum transmit power is 150 W, maximum utilization of the transmit power of the antenna system cannot be implemented.

Therefore, this application provides a multi-plane antenna system. A power control module is used to configure a power of the entire multi-plane antenna system, to implement coordination and power sharing and allocation among a plurality of antennas.

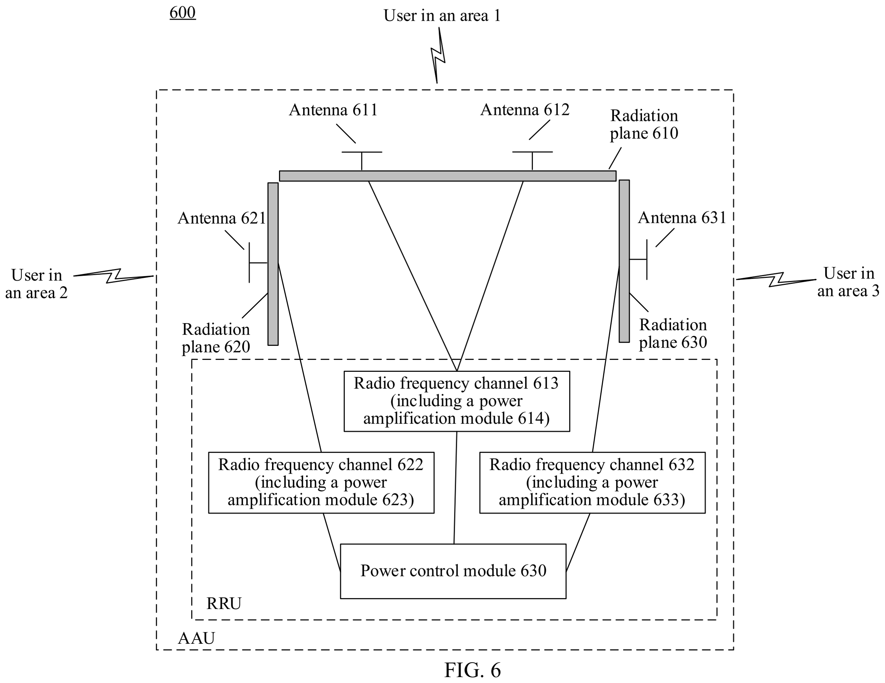

It should be noted that, the multi-plane antenna system provided in this application is described below with reference to FIG. 5 and FIG. 6 and by using a two-plane antenna system and a three-plane antenna system (for an architecture of the two-plane antenna system and an architecture of the three-plane antenna system, refer to descriptions in FIG. 2 and FIG. 3 respectively) respectively as an example. The multi-plane antenna system provided in this application is further applicable to a four-plane antenna system and another multi-plane antenna system. This is not limited in this application.

FIG. 5 is a diagram of a structure of a two-plane antenna system 500 according to this application.

As shown in FIG. 5, the two-plane antenna system 500 includes a radiation plane 510 and a radiation plane 520. Each radiation plane serves a user in a respective area. For example, in FIG. 5, the radiation plane 510 serves a user in an area 1, and the radiation plane 520 serves a user 2 in an area 2. Each radiation plane includes at least one antenna unit, and orientations of different radiation planes are different. For example, in FIG. 5, an orientation of the radiation plane 510 and an orientation of the radiation plane 520 are different. An antenna of each radiation plane is connected to a back-end radio frequency channel, and each radio frequency channel includes a power amplification module. For example, in FIG. 5, the radiation plane 510 includes one antenna 511, and the radiation plane 520 includes one antenna 521. The antenna 511 is connected to a radio frequency channel 512, and the radio frequency channel 512 includes a power amplification module 513. The antenna 521 is connected to a radio frequency channel 522, and the radio frequency channel 522 includes a power amplification module 523.

It should be noted that a direction of an antenna on each radiation plane is not limited in this application, and the direction of the antenna in FIG. 3 is merely an example.

It should be noted that the radio frequency channel and the antenna may be disposed in a same module (for example, in an active antenna unit (active antenna unit, AAU) form), or may be disposed in an independent module (for example, in a remote radio unit (remote radio unit, RRU) form).

In a possible implementation, on each radiation plane, both at least one antenna and the radio frequency channel are located inside the active antenna unit.

In a possible implementation, on each radiation plane, at least one antenna is located inside a passive antenna, and the radio frequency channel is located inside the remote radio unit.

The two-plane antenna system 500 shown in FIG. 5 further includes one power control module 530. The power control module 530 is logically connected to the radio frequency channel 512 and the radio frequency channel 522 respectively. Specifically, based on a service requirement, the power control module 530 is used to share and allocate powers of different radiation planes in the two-plane antenna system 500.

It should be understood that, that the power control module 530 is logically connected to the radio frequency channel 512 and the radio frequency channel 522 respectively may be understood as a case in which the power control module 530 is respectively directly or indirectly connected to radio frequency channels (the radio frequency channel 512 and the radio frequency channel 522) corresponding to different radiation planes (the radiation plane 510 and the radiation plane 520). A connection manner of the logical connection is not limited in this application.

It should be noted that the power control module 530 may be located inside the RRU or the AAU, or may be located outside the RRU or the AAU. This is not limited in this application.

The following describes a solution in which a power control module is used to perform power sharing and allocation between different radiation planes in the multi-plane antenna system provided in this application.

Specifically, it is assumed that one multi-plane antenna system (device) has a total of N radiation planes, and a maximum transmit power of a standard specification of the multi-plane antenna system is Ptotal, where a transmit power of a radio frequency channel corresponding to a 1^{st} radiation plane is P1, a transmit power of a radio frequency channel corresponding to a 2^{nd} radiation plane is P2, and the rest is deduced by analogy. A transmit power of a radio frequency channel corresponding to an N^{th} radiation plane is PN. In the multi-plane antenna system, P1 reaches a maximum value P1max at a moment T1, P2 reaches a maximum value P2max at a moment T2, and the rest is deduced by analogy. PN reaches a maximum value PNmax at a moment TN. T1 to TN are different moments. When the power control module is used to perform sharing and allocation on transmit powers of the N radiation planes, at different moments, a sum of maximum transmit powers of different radiation planes is greater than the maximum transmit power of the multi-plane antenna system, that is, P1max+P2max+...+PNmax>Ptotal, and at different moments, the maximum transmit powers of different radiation planes are all less than or equal to the maximum transmit power of the multi-plane antenna system, that is, P1max≤Ptotal, P2max≤ Ptotal, ..., and PNmax≤Ptotal. However, at a same moment, a sum of the transmit powers of different radiation planes is less than the maximum transmit power of the multi-plane antenna system, that is, P1+P2+...+PN≤Ptotal.

It should be understood that, to enable P1max+P2max+...+PNmax to be greater than Ptotal, a power amplification capability of a power amplification module in the radio frequency channel needs to be improved. Therefore, a design specification of the power amplification module needs to be improved, that is, a maximum power amplification capability of the power amplification module needs to be improved. In this way, for the multi-plane antenna system, when a quantity of radiation planes is greater, and the power amplification capability of the power amplification module in the radio frequency channel is higher, a power that can support the multi-plane antenna system is shared and allocated between different radiation planes without being limited by the power amplification capability, to improve performance of the multi-plane antenna system.

Specifically, for the N radiation planes in the multi-plane antenna system, each radiation plane is connected to at least one radio frequency channel, and each radio frequency channel includes (corresponds to) one power amplification module. In this case, a power amplification capability of at least one power amplification module in the multi-plane antenna system is greater than a value obtained by dividing the maximum transmit power (Ptotal) of the multi-plane antenna system by a total quantity of radio frequency channels in the multi-plane antenna system.

For ease of understanding, with reference to FIG. 5, example descriptions are provided below by using a specific power sharing and allocation solution of the power control module 530 as an example.

For example, a maximum transmit power of a standard specification of the two-plane antenna system 500 is 200 W. The radiation plane 510 corresponds to the radio frequency channel 512, and the radio frequency channel 512 includes the power amplification module 513. The radiation plane 520 corresponds to the radio frequency channel 522, and the radio frequency channel 522 includes the power amplification module 523. For the power amplification module 513 and the power amplification module 523, a power amplification capability of at least one of the two power amplification modules is greater than a value obtained by dividing the maximum transmit power (200 W) of the two-plane antenna system 500 by a total quantity (2) of radio frequency channels in the two-plane antenna system 500. For example, a power amplification capability of the power amplification module 513 is greater than 100 W. For another example, a power amplification capability of the power amplification module 523 is greater than 100 W. For another example, both a power amplification capability of the power amplification module 513 and a power amplification capability of the power amplification module 523 are greater than 100 W.

The following uses an example in which an available transmit power value of the two-plane antenna system 500 is 200 W, and a maximum transmit power of each radiation plane is also 200 W, that is, both a maximum transmit power of the radiation plane 510 and a maximum transmit power of the radiation plane 520 are 200 W for description.

For example, at the moment T1, the user in the area 1 has a communication service, and a transmit power of a service requirement is 200 W, but the user in the area 2 does not have the communication service. In this case, the power control module 530 controls the radiation plane 510 to transmit the power of 200 W, and the radiation plane 520 does not transmit the power.

For example, at the moment T2, the user in the area 2 has a communication service, and a transmit power of a service requirement is 200 W, but the user in the area 1 does not have the communication service. In this case, the power control module 530 controls the radiation plane 520 to transmit the power of 200 W, and the radiation plane 510 does not transmit the power.

For example, at a moment T3, both the user in the area 1 and the user in the area 2 have communication services, and both a transmit power of a service requirement of the user in the area 1 and a transmit power of a service requirement of the user in the area 2 are 100 W. In this case, the power control module 530 controls the radiation plane 510 and the radiation plane 520 to respectively transmit the power of 100 W.

For example, at a moment T4, both the user in the area 1 and the user in the area 2 have communication services, and a transmit power of a service requirement corresponding to the user in the area 1 and a transmit power of a service requirement corresponding to the user in the area 2 are respectively 80 W and 50 W. The power control module 530 allocates, based on the service requirements and allocates 80 W to the radiation plane 510 and 50 W to the radiation plane 520. In this case, in the available transmit power value of the two-plane antenna system 500, there is still 70 W unallocated or 70 W is left (that is, a difference between a sum of the service requirement corresponding to the radiation plane 510 and the service requirement corresponding to the radiation plane 520 and the available transmit power value of the two-plane antenna system is 70 W). To implement maximum utilization of the transmit power of the two-plane antenna system, the power control module 530 may further allocate the unallocated 70 W based on a ratio of 1:1, that is, the power control module 530 may further allocate 35 W to the radiation plane 510 and the radiation plane 520 respectively. In other words, actually, the power control module 530 controls the radiation plane 510 to transmit a power of 115 W, and controls the radiation plane 520 to transmit a power of 85 W.

It should be noted that, in the foregoing FIG. 5, an example in which each radiation plane is connected to one radio frequency channel is used for description. A quantity of radio frequency channels connected to each radiation plane is not limited in this application.

It should be understood that, in the multi-plane antenna system, if a radiation plane is connected to at least two radio frequency channels, a power amplification capability of a power amplification module included in one of the radio frequency channels needs to be greater than a value obtained by dividing the maximum transmit power of the multi-plane antenna system by the total quantity of radio frequency channels included in the multi-plane antenna system. A power amplification capability of a power amplification module included in another radio frequency channel of the radiation plane is not limited.

Based on the foregoing power allocation solution, at a specific moment, total transmit powers of radiation planes in the system do not exceed a nominal maximum transmit power of the system. However, at different moments, a sum of maximum transmit powers of different radiation planes exceeds the nominal maximum transmit power of the system. Therefore, coordination among a plurality of radiation planes and power sharing and allocation are implemented. When different radiation planes serve different cells, power sharing between the cells can be implemented.

FIG. 6 is a diagram of a structure of a three-plane antenna system 600 according to this application.

As shown in FIG. 6, the three-plane antenna system 600 includes a radiation plane 610, a radiation plane 620, and a radiation plane 630. Each radiation plane serves a user in a respective area. For example, in FIG. 6, the radiation plane 610 serves a user in an area 1, the radiation plane 620 serves a user in an area 2, and the radiation plane 630 serves a user in an area 3. Each radiation plane includes at least one antenna unit, and orientations of different radiation planes are not completely the same (alternatively, on the three radiation planes of the three-plane antenna system 600, orientations of at least two radiation planes are different). For example, in FIG. 6, the radiation plane 610 includes one antenna 611 and one antenna 612, the radiation plane 620 includes one antenna 621, and the radiation plane 630 includes one antenna 631. An orientation of the radiation plane 610 and an orientation of the radiation plane 620 are different, the orientation of the radiation plane 610 and an orientation of the radiation plane 630 are different, and the orientation of the radiation plane 620 and the orientation of the radiation plane 630 are the same. An antenna of each radiation plane is connected to a back-end radio frequency channel, and the radio frequency channel includes a power amplification module (power amplifier, PA). For example, in FIG. 6, both the antenna 611 and the antenna 612 are connected to a radio frequency channel 613, and the radio frequency channel 613 includes a power amplification module 614. The antenna 621 is connected to a radio frequency channel 622, and the radio frequency channel 622 includes a power amplification module 623. The antenna 631 is connected to a radio frequency channel 632, and the radio frequency channel 632 includes a power amplification module 633.

It should be understood that the orientations of different radiation planes are not completely the same. In the at least two radiation planes included in the multi-plane antenna system, orientations of two radiation planes need to be different. For example, in FIG. 6, except that the orientation of the radiation plane 610 and the orientation of the radiation plane 620 are different, the orientation of the radiation plane 610 and the orientation of the radiation plane 630 are different, and the orientation of the radiation plane 620 and the orientation of the radiation plane 630 are the same, in a possible implementation, the orientation of the radiation plane 610, the orientation of the radiation plane 620, and the orientation of the radiation plane 630 may alternatively be different from each other. This is not limited in this application.

It should be noted that the radio frequency channel and the antenna may be disposed in a same module (for example, in an active antenna unit (active antenna unit, AAU) form), or may be disposed in an independent module (for example, in a remote radio unit (remote radio unit, RRU) form).

The three-plane antenna system 600 shown in FIG. 6 further includes one power control module 630. The power control module 630 is logically connected to the radio frequency channel 613, the radio frequency channel 622, and the radio frequency channel 632 respectively. Specifically, based on a service requirement, the power control module 630 is configured to allocate powers of different radiation planes in the three-plane antenna system 600.

It should be understood that, that the power control module 630 is logically connected to the radio frequency channel 613, the radio frequency channel 622, and the radio frequency channel 632 respectively may be understood as a case in which the power control module 630 is respectively directly or indirectly connected to the radio frequency channel 613, the radio frequency channel 622, and the radio frequency channel 632 that correspond to different radiation planes (the radiation plane 610, the radiation plane 620, and the radiation plane 630). A connection manner of the logical connection is not limited in this application.

It should be noted that the power control module 630 may be located inside the RRU or the AAU, or may be located outside the RRU or the AAU. This is not limited in this application.

It should be noted that, for related descriptions of the foregoing power control module 630, refer to related descriptions of the power control module 530 in FIG. 5. To avoid repetition, detailed descriptions thereof are omitted herein.

For ease of understanding, example descriptions are provided below by using a specific power allocation solution of the power control module 630 as an example.

For example, a nominal maximum transmit power of the three-plane antenna system 600 is 300 W. The radiation plane 610 corresponds to the radio frequency channel 613, and the radio frequency channel 613 includes the power amplification module 614; the radiation plane 620 corresponds to the radio frequency channel 622, and the radio frequency channel 622 includes the power amplification module 623; and the radiation plane 630 corresponds to the radio frequency channel 632, and the radio frequency channel 632 includes the power amplification module 633. For the power amplification module 614, the power amplification module 623, and the power amplification module 633, a power amplification capability of at least one of the three power amplification modules is greater than a value obtained by dividing a maximum transmit power (600 W) of the three-plane antenna system 600 by a total quantity (3) of radio frequency channels in the three-plane antenna system 600. For example, a power amplification capability of the power amplification module 614 is greater than 200 W. For another example, a power amplification capability of the power amplification module 623 is greater than 200 W. For another example, a power amplification capability of the power amplification module 633 is greater than 200 W. For another example, both a power amplification capability of the power amplification module 614 and a power amplification capability of the power amplification module 623 are greater than 200 W. For another example, a power amplification capability of the power amplification module 614, a power amplification capability of the power amplification module 623, and a power amplification capability of the power amplification module 633 are all greater than 200 W.

The following uses an example in which an available transmit power value of the three-plane antenna system 600 is 300 W, and a maximum transmit power of each radiation plane is also 300 W, that is, a maximum transmit power of the radiation plane 610, a maximum transmit power of the radiation plane 620, and a maximum transmit power of the radiation plane 630 are all 300 W for description.

For example, at a moment T1, the user in the area 1 has a communication service, and a transmit power of a service requirement is 300 W, but the user in the area 2 and the user in the area 3 do not have communication services. In this case, the power control module controls the radiation plane 610 to transmit the power of 300 W, and the radiation 620 and the radiation plane 630 do not transmit the power.

For example, at a moment T2, the user in the area 2 has a communication service, and a transmit power of a service requirement is 300 W, but the user in the area 1 and the user in the area 3 do not have communication services. In this case, the power control module controls the radiation plane 620 to transmit the power of 300 W, and the radiation plane 610 and the radiation plane 630 do not transmit the power.

For example, at a moment T3, the user in the area 3 has a communication service, and a transmit power of a service requirement is 300 W, but the user in the area 1 and the user in the area 2 do not have communication services. In this case, the power control module controls the radiation plane 630 to transmit the power of 300 W, and the radiation plane 610 and the radiation plane 620 do not transmit the power.

For example, at a moment T4, the user in the area 1, the user in the area 2, and the user in the area 3 all have communication services, and both a transmit power of a service requirement corresponding to the user in the area 1 and a transmit power of a service requirement corresponding to the user in the area 2 are 100 W. In this case, the power control module controls the radiation plane 610, the radiation plane 620, and the radiation plane 630 to respectively transmit the power of 100 W.

For example, at a moment T5, both the user in the area 1 and the user in the area 2 have communication services, and a transmit power of a service requirement corresponding to the user in the area 1 and a transmit power of a service requirement corresponding to the user in the area 2 are respectively 100 W and 50 W; and the user in the area 3 does not have a communication service. In this case, the power control module 630 allocates, based on the service requirements, 100 W to the radiation plane 510 and allocates 50 W to the radiation plane 520. In this case, in the available transmit power value of the three-plane antenna system, there is still 150 W unallocated or 150 W is left (that is, a difference between a sum of the service requirement corresponding to the radiation plane 510 and the service requirement corresponding to the radiation plane 520 and the available transmit power value of the three-plane antenna system is 150 W). To implement maximum utilization of the transmit power of the three-plane antenna system, the power control module 630 may further allocate the unallocated 150 W based on a ratio of 1:1:1, that is, the power control module 630 may further allocate 50 W to the radiation plane 610, the radiation plane 620, and the radiation plane 630 respectively. In other words, actually, the power control module 630 controls the radiation plane 610 to transmit a power of 150 W, controls the radiation plane 620 to transmit a power of 100 W, and controls the radiation plane 630 to transmit a power 50 W.

It should be noted that, in the foregoing FIG. 6, an example in which each radiation plane is connected to one radio frequency channel is used for description. A quantity of radio frequency channels connected to each radiation plane is not limited in this application.

Based on the foregoing power allocation solution, at a specific moment, total transmit powers of radiation planes in the system do not exceed the nominal maximum transmit power of the system. However, at different moments, a sum of maximum transmit powers of different radiation planes exceeds the nominal maximum transmit power of the system. Therefore, coordination among a plurality of radiation planes and power sharing and allocation are implemented. When different radiation planes serve different cells, power sharing between the cells can be implemented.

It should be understood that the multi-plane antenna system shown in the foregoing FIG. 5 and FIG. 6 may be a base station, or may be another communication device having a same or similar function as that of the base station, or the like. This is not limited in this application.

A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and another division manner may be used during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-plane antenna system, comprising:
at least two radiation planes, configured to radiate signals, wherein each radiation plane comprises at least one antenna, each radiation plane is connected to at least one radio frequency channel, orientations of M radiation planes of the at least two radiation planes are different, and M is a positive integer greater than or equal to 2; and
a power control module, configured to determine transmit powers of the at least two radiation planes based on an available transmit power value of the multi-plane antenna system, wherein the power control module is logically connected to radio frequency channels corresponding to the at least two radiation planes.

2. The multi-plane antenna system according to claim 1, wherein that the power control module is configured to determine the transmit powers of the at least two radiation planes based on the available transmit power value of the multi-plane antenna system comprises:
the power control module is configured to determine, based on the available transmit power value of the multi-plane antenna system and service requirements corresponding to the at least two radiation planes, power amplification outputs of power amplification modules corresponding to the at least two radiation planes.

3. The multi-plane antenna system according to claim 1 or 2, wherein that the power control module is configured to determine, based on the available transmit power value of the multi-plane antenna system and the service requirements corresponding to the at least two radiation planes, the power amplification outputs of the power amplification modules corresponding to the at least two radiation planes comprises:
the power control module is configured to determine a power difference based on the available transmit power value of the multi-plane antenna system and the service requirements corresponding to the at least two radiation planes, wherein the power difference is a difference between a sum of the service requirements corresponding to the at least two radiation planes and the available transmit power value of the multi-plane antenna system; and
the power control module is configured to determine, based on the service requirements corresponding to the at least two radiation planes and the power difference, the power amplification outputs of the power amplification modules corresponding to the at least two radiation planes.

4. The multi-plane antenna system according to any one of claims 1 to 3, wherein each radio frequency channel comprises a power amplification module, and a power amplification capability of at least one power amplification module in the multi-plane antenna system is greater than a value obtained by dividing a maximum transmit power of the multi-plane antenna system by a quantity of radio frequency channels in the multi-plane antenna system.

5. The multi-plane antenna system according to claim 4, wherein the at least two radiation planes comprise a first radiation plane and a second radiation plane, the first radiation plane has a maximum value of a transmit power at a first moment, the maximum value of the transmit power of the first radiation plane is a first power value, the second radiation plane has a maximum value of a transmit power at a second moment, and the maximum value of the transmit power of the second radiation plane is a second power value; and
a sum of the first power value and the second power value is greater than the maximum transmit power of the multi-plane antenna system, wherein the first power value is less than or equal to the maximum transmit power of the multi-plane antenna system, and the second power value is less than or equal to the maximum transmit power of the multi-plane antenna system.

6. The multi-plane antenna system according to any one of claims 1 to 5, wherein the at least two radiation planes comprise the first radiation plane and the second radiation plane, a transmit power of the first radiation plane at a third moment is a third power value, a transmit power of the second radiation plane at the third moment is a fourth power value, and a sum of the third power value and the fourth power value is less than or equal to the maximum transmit power of the multi-plane antenna system.

7. The multi-plane antenna system according to any one of claims 1 to 6, wherein on each radiation plane, the at least one antenna and the radio frequency channel are located inside an active antenna unit; or the at least one antenna is located inside a passive antenna, and the radio frequency channel is located inside a remote radio unit.

8. The multi-plane antenna system according to any one of claims 1 to 7, wherein the power control module is located inside the active antenna unit or the remote radio unit; or the power control module is located outside the active antenna unit or the remote radio unit.

9. A power allocation method, wherein the method is applied to a multi-plane antenna system, and the multi-plane antenna system comprises at least two radiation planes and a power control module, wherein the method comprises:
determining, by the power control module, transmit powers of the at least two radiation planes based on an available transmit power value of the multi-plane antenna system; and
allocating, by the power control module, the transmit powers of the at least two radiation planes to the at least two radiation planes, wherein
each of the at least two radiation planes comprises at least one antenna, each radiation plane is connected to at least one radio frequency channel, orientations of M radiation planes of the at least two radiation planes are different, M is a positive integer greater than or equal to 2, and the power control module is logically connected to radio frequency channels corresponding to the at least two radiation planes.

10. The method according to claim 9, wherein determining, by the power control module, the transmit powers of the at least two radiation planes based on the available transmit power value of the multi-plane antenna system comprises:
determining, by the power control module, based on the available transmit power value of the multi-plane antenna system and service requirements of the at least two radiation planes, power amplification outputs of power amplification modules corresponding to the at least two radiation planes.

11. The method according to claim 9 or 10, wherein determining, by the power control module, based on the available transmit power value of the multi-plane antenna system and the service requirements of the at least two radiation planes, the power amplification outputs of the power amplification modules corresponding to the at least two radiation planes comprises:
determining, by the power control module, a power difference based on the available transmit power value of the multi-plane antenna system and the service requirements of the at least two radiation planes, wherein the power difference is a difference between a sum of the service requirements corresponding to the at least two radiation planes and the available transmit power value of the multi-plane antenna system; and
determining, by the power control module, based on the service requirements corresponding to the at least two radiation planes and the power difference, the power amplification outputs of the power amplification modules corresponding to the at least two radiation planes.

12. The method according to any one of claims 9 to 11, wherein each radio frequency channel comprises a power amplification module, and a power amplification capability of at least one power amplification module in the multi-plane antenna system is greater than a value obtained by dividing a maximum transmit power of the multi-plane antenna system by a quantity of radio frequency channels in the multi-plane antenna system.

13. The method according to claim 12, wherein the at least two radiation planes comprise a first radiation plane and a second radiation plane, the first radiation plane has a maximum value of a transmit power at a first moment, the maximum value of the transmit power of the first radiation plane is a first power value, the second radiation plane has a maximum value of a transmit power at a second moment, and the maximum value of the transmit power of the second radiation plane is a second power value; and
a sum of the first power value and the second power value is greater than the maximum transmit power of the multi-plane antenna system, wherein the first power value is less than or equal to the maximum transmit power of the multi-plane antenna system, and the second power value is less than or equal to the maximum transmit power of the multi-plane antenna system.

14. The method according to any one of claims 9 to 13, wherein the at least two radiation planes comprise the first radiation plane and the second radiation plane, a transmit power of the first radiation plane at a third moment is a third power value, a transmit power of the second radiation plane at the third moment is a fourth power value, and a sum of the third power value and the fourth power value is less than or equal to the maximum transmit power of the multi-plane antenna system.

15. A communication device, comprising the multi-plane antenna system according to any one of claims 1 to 8, or a device that is capable of performing the method according to any one of claims 9 to 14.
